# EUROPEAN PATENT APPLICATION

(11) **EP 1 491 593 A1**
(43) Date of publication of application: **29.12.2004**
(21) Application number: 03014354.9
(22) Date of filing: 26.06.2003
(51) Int. Cl.: C09D 5/00, C09D 167/00, C08J 3/00, B01J 2/00

(54) **Process for the manufacture of semi-crystalline powder coating**

(71) Applicant: UCB, S.A., 1070 Bruxelles (BE)
(72) Inventor: Moens, Luc, 1640 Sint-Genesius-Rode (BE); Knoops, Nele, 3020 Herent (BE); Maetens, Daniel, 1082 Bruxelles (BE); Warnecke, Hans-Joachim, 33104 Paderborn (DE); Vestweber, Jörn, 33102 Paderborn (DE)

(57) **Abstract**

The present invention concerns a process for the manufacture of a powder coating composition, comprising, as binder, at least one saturated or unsaturated semi-crystalline polyester or polyesterurethane A) and ,optionally, one or more saturated or unsaturated compounds B) different from A), at least one of which being reactable with the other resins present in the binder. The process comprises forming a molten mixture of A) and eventually B) and optionally other constituents essential for the manufacture of powder coatings, atomising the resulting melt into droplets using acoustic forces of an ultrasonic standing wave field and allowing the atomised droplets to cool to form solid free flowing semi-crystalline powder particles.

## Description

The present invention concerns a process for the manufacture of a powder coating composition, comprising, as binder, at least one saturated or unsaturated semi-crystalline polyester or polyesterurethane A) and ,optionally, one or more saturated or unsaturated compounds B) different from A), at least one of which being reactable with the other resins present in the binder. The process comprises forming a molten mixture of A) and eventually B) and optionally other constituents essential for the manufacture of powder coatings, atomising the resulting melt into droplets using acoustic forces of an ultrasonic standing wave field and allowing the atomised droplets to cool to form solid free flowing semi-crystalline powder particles.

In the present specification, the word "polyester" encompasses as well pure polyesters as polyesters having urethanes groups in the chain, which are known as "polyesterurethanes".

Powder coatings are widely used for the general painting of metals, as environmentally friendly paints which do no release organic solvents into the atmosphere during paint application.
Normally, a powder coating is manufactured by manufacturing a main constituent resin, subjecting the resin to coarse crushing, dry blending with a hardener and various additives, and then subjecting the dry blend to extrusion, cooling, a second crushing process, and classification. Compared with solvent based paints, the manufacturing process is long and complex, and consequently the problem arises of increased manufacturing cost especially when thin film powders are considered.

Currently, the great majority of binders constituting most todays' powder compositions are based on amorphous resins. However, when the binder is amorphous it is difficult to prepare perfect pulverulent compositions, because they must satisfy often contradictory criteria. For the powder particles to be able to coalesce and form a perfectly homogeneous and uniform coating, it is necessary for its viscosity, at the melting and curing temperature, to be sufficiently low to ensure good wetting of the pigments and other solid materials accompanying the binder in the formulation of the said powder compositions and a good spreading of the molten film on the surface of the substrate.

Yet low melt viscosities most of the time go hand in hand with a low glass transition temperature of the corresponding powder coating compositions resulting in a poor stability of the powder during storage and transportation.
These problems are solved in powder compositions of which the binder is formed by a semi-crystalline polyester being used alone or as a mixture with amorphous resins. This is because the properties of semi-crystalline polyesters make it possible to avoid, to a large extent, the drawbacks described previously which arise from controlling the glass transition temperature and the melt viscosity of amorphous resins.
Firstly, semi-crystalline polyesters have a high melting point and, as the case may be, a low glass transition temperature. Consequently, the melt viscosity of semi-crystalline polyesters is much lower than that of the amorphous polyesters of comparable molecular weight, which are commonly used in powder compositions. This means that powder coating compositions based on semi-crystalline polyesters exhibit better fluidity of the coating film in the molten state, giving final coatings free of orange-peel effects.
Furthermore, by virtue of the crystallinity of the polyesters, the powders formulated have very good storage stability. In addition, compared to amorphous resins, semi-crystalline polyesters provide coatings having outstanding mechanical properties.

Besides the many advantages typical to powder coating compositions comprising semi-crystalline polyesters, a few drawbacks/limitations are still observed when the processing of such powders is considered. First of all, there is the fact that semi-crystalline polyesters besides the crystalline part all contain an amorphous zone. Cooling of the semi-crystalline polyester from the molten to the solid state thus is critical. A too fast cooling will prevent the crystalline part to be built up and a fully amorphous sticky resin characterised by a glass transition temperature lower than room temperature will be obtained.
This means that during the preparation of semi-crystalline resin containing powders, a careful cooling of the extrudate should be considered in order to enable a proper recrystallisation of the extrudate.

Secondly there is the grinding of the semi-crystalline extrudate. Due to the fact that the semi-crystallinity already implies some mechanical strength of the extrudate, the enormous dissipation of heat created by the grinding process often causes partial melting of the powder in the making and thus blocking of the grinding equipment.

Though a cryogenic grinding remedies this problem, an intensive and repeated grinding along with a classification of the powder particles obtained still are inevitable in order to obtain processable powders. Of course economical benefits fade away.

We now have surprisingly found that the use of an ultrasonic standing wave field, generated by two sonotrodes facing each other and fixed on a common horizontal axis at a predetermined distance of n.(λ/2) of the acoustic wavelength λ, enables for the disintegration of the molten extrudate, obtained from powder coating compositions containing a semi-crystalline binder, into fine droplets which, although an immediate solidification arises, are converted into free flowing semi-crystalline powder particles, proving a spherical particle size, a narrow particle size distribution and ultra fine particle mean diameter, powder characteristics altogether unattainable by conventional grinding techniques as used in nowadays powder processing.

In fact, as can be seen from the examples of this specification, the d50 value, which is the particle size for which just 50% are greater than or smaller than the d50 value, varies from 31 micrometers to 37 micrometers. According to the invention, the d50 values vary between 10 and 70 , and preferably from 20 to 50. These low d50 values are unexpectedly low for powder coatings and are not attainable by conventional grinding techniques. These low d50 values bring about the possibility of producing smooth thin coatings. The more unexpected result of the invention is that the ultrasonic standing wave field transforms immediately the molten powder into solid semi-crystalline particles. No particular measure is to be taken in order to gently cool down the molten powder in order to preserve its semi-crystallinity. The semi-crystalline state is directly obtained at the exit of the ultrasonic standing wave field.

Though the use of ultrasonic standing wave atomisation for the manufacture of powder coatings already is known from WO 92/00342 and DE 4328088, the powders concerned all are based on an amorphous thermosetting binder system, where the cooling down of the atomised droplets to solid powder particles is quite critical and necessitates special equipment (see pages 20-21 of WO 92/00342). On the contrary, with compositions containing semi-crystalline binders, the cooling down proceeds naturally, without special measures or equipment having to be implemented.

The applicant is not aware of any experimental evidence proving neither the utility nor the effectiveness of the ultrasonic standing wave atomisation in the disintegration and application of powder coating compositions composed of a semi-crystalline binder.

The process according to the present invention thus comprises:
a) the melting of a powder coating composition, comprising, as binder, at least one saturated or unsaturated semi-crystalline polyester or polyesterurethane A) and, optionally, one or more saturated or unsaturated compounds B) different from A), at least one of which being reactable with the other resins present in the binder, and other constituents essential for the manufacture of powder coatings,
b) atomising the resulting melt into droplets using acoustic forces of an ultrasonic standing wave field, made up of ultrasonic waves generated by two sonotrodes, facing each other and oscillating with the same amplitude of about 60 to 140 µm at a substantial identical constant frequency of at least 10 kHz, preferably between 20 and 50 kHz and
c) allowing the atomised droplets to cool to form solid free flowing semi-crystalline powder particles.

Thus, according to the present invention there is provided a process for the preparation of fine, spherical particles with a narrow particle size distribution from a powder coating compositions comprising a binder composed of A) from 10 - 100% weight, preferably from 50 to 100% weight and more preferably from 70 to 100% weight of at least one saturated or unsaturated semi-crystalline polyester or polyesterurethane and B) from 0 - 90% weight, preferable from 0 to 50% weight and more preferable from 0 to 30% weight of one or more saturated or unsaturated compounds different from A), wherein:
A) is a carboxyl and/or hydroxyl and/or (meth)acryloyl group functionalised semi-crystalline polyester prepared from the condensation of an aliphatic, cycloaliphatic or aromatic polyacid, used in a mixture or alone but preferably alone, and from a linear chain aliphatic or cycloaliphatic polyol, used in a mixture or alone but preferably alone and optionally a polyisocyanate.
   The (meth)acryloyl group functionalised semi-crystalline polyesters are prepared from reaction of glycidyl(meth)acrylate with a carboxyl functional semi-crystalline polyester or from reaction of hydroxyalkyl(meth)acrylate and a hydroxyl functional semi-crystalline polyester with an equivalent amount of a diisocyanate.
   The semi-crystalline polyesters are characterised by:
   - a number averaged molecular weight ranging from 800 to 16 000, preferably from 1 300 to 8 500
   - a melt viscosity (cone/plate at 200°C) of less than 10 000 mPa.s
   - an acid number and/or a hydroxyl number ranging from 10 to 100 mg KOH/g and preferably from 20 to 70 mg KOH/g when an acid and/or an hydroxyl functional polyester is considered.
   - a degree of unsaturation ranging from 0.15 to 4.00 and preferably from 0.35 to 2.50 milliequivalents of double bonds per gram of polyester when an unsaturated polyester is considered.
   - a melting point ranging from 60 to 150°C and a glass transition temperature of less than 50°C for semi-crystalline polyesters.
   - a degree of crystallinity, measured by differential scanning calorimetry (DSC) according to ASTM D3415 of at least 5 J/g, and preferably 10 J/g.
B) is either:
   B1) a carboxyl and/or hydroxyl and/or (meth)acryloyl group functionalised amorphous polyester prepared from the condensation of an aliphatic, cycloaliphatic or aromatic polyacid, used in a mixture or alone and from an aliphatic or cycloaliphatic polyol, used in a mixture or alone and optionally a polyisocyanate.
      The (meth)acryloyl group functionalised amorphous polyesters are prepared from reaction of glycidyl(meth)acrylate with a carboxyl functional amorphous polyester or from reaction of hydroxyalkyl(meth)acrylate and a hydroxyl functional amorphous polyester with an equivalent amount of a diisocyanate.
      The amorphous polyesters are characterised by:
      - a number averaged molecular weight ranging from 800 to 16 000, preferably from 1 300 to 8 500
      - a melt viscosity (cone/plate at 200°C) of less than 50 000 mPa.s
      - an acid number and/or a hydroxyl number ranging from 10 to 100 mg KOH/g and preferably from 20 to 70 mg KOH/g when an acid and/or an hydroxyl functional polyester is considered.
      - a degree of unsaturation ranging from 0.15 to 4.00 and preferably from 0.35 to 2.50 milliequivalents of double bonds per gram of polyester when an unsaturated polyester is considered
      - a glass transition temperature of from 45 to 85°C and preferably from 55 to 70°C ; or
   B2) a carboxylic and/or a hydroxyl and/or a glycidyl and/or (meth)acryloyl group functionalised acrylic copolymer
      The acrylic copolymer is composed of from 40 to 95% mole of at least one acrylic or methacrylic monomer, from 0 to 60% mole of at least one other ethylenically unsaturated monomer and from 5 to 60% mole of an (meth)acryloyl group containing monomer having functional groups selected from epoxy, carboxyl or hydroxyl groups.
      The acrylate copolymer is prepared in a conventional polymerisation process, such as polymerisation in bulk, in emulsion, or in solution in an organic solvent, in which a certain portion of functional monomer is copolymerised to obtain a functionalised acrylate copolymer. This functional monomer, which is usually present in amounts of between 5 and 60% mole, is an epoxy - functional monomer, for example on the basis of glycidyl (meth)acrylate, an acid-functional monomer, for example on the basis of (meth)acrylic acid, or an hydroxyl-functional monomer, for example on the basis of hydroxyethyl (meth)acylate.
      When (meth)acryloyl group containing acrylic copolymers are considered, the acrylic copolymer having glycidyl, carboxyl or hydroxyl groups, then further is reacted in an ulterior step with respectively a carboxylic acid functional monomer such as (meth)acrylic acid, a glycidyl functional monomer such as glycidyl(met)acrylate or an isocyanate functional monomer such as TMI (benzene, 1-(1-isocyanato-1-methylethyl)-4-(1-methylethenyl)) or MOI (2-isocyanatoethylmethacrylate. Alternatively an acrylic copolymer having isocyanate groups is further reacted with a hydroxyl functional monomer.
      The acrylic copolymer of the powder composition of the present invention exhibit following characteristics:
      - a number average molecular weight (Mn) from 500 to 50.000 and preferably from 2 000 to 10. 000 measured by GPC
      - an acid number and/or a hydroxyl number ranging from 10 to 100 mg KOH/g and preferably from 20 to 70 mg KOH/g when an acid and/or an hydroxyl functional acrylic copolymer is considered.
      - an epoxy equivalent weight (EEW) of from 125 to 2000 and preferably from 200 to 1000 when a glycidyl group containing acrylic copolymer is considered.
      - a degree of unsaturation from 0.35 to 3.50 and preferably from 0.5 to 2.5 milliequivalents of double bounds per gram of acrylic copolymer when a (meth)acryloyl group containing acrylic copolymer is considered.
      - an ICI cone/plate melt viscosity of less than 50 000 mPa.s measured at 200°C according to ASTM D4287
      - a glass transition temperature (Tg) from 45 to 100°C as determined by DSC according to ASTM D3418; or
   B3) a glycidyl or (meth)acryloyl group containing (hydrogenated) polyphenoxy resin. The (meth)acryloyl group containing (hydrogenated) polyphenoxy resin is prepared from the reaction of the glycidyl group of the (hydrogenated) polyphenoxy resin with (meth)acrylic acid or the reaction product of an hydroxyalkylester of (meth)acrylic acid such as hydroxyethyl(meth)acrylate with an anhydride such as phthalic anhydride or succinic anhydride and
      characterised by
      - a degree of unsaturation of 0.2 to 6.0, particularly of 0.5 to 4.5 milliequivalents of double bonds per gram of resin when a (meth)acryloyl group containing (hydrogenated) polyphenoxy resin is considered
      - an epoxy equivalent weight (EEW) of from 150 to 4000, preferably 200 to 2000, when a glycidyl group containing (hydrogenated) polyphenoxy resin is considered
      - a number average molecular weight (Mn) from 450 to 5000, preferably between 650 and 3500, measured by gel permeation chromatography (GPC)
      - a glass transition temperature (Tg) determined by differential scanning calorimetry (DSC) according to ASTM D3418, from 30 to 80°C
      - a viscosity in the molten state measured at 200°C with a cone/plate viscometer (known under the name of ICI viscosity) according to ASTM D4287, of less than 20 000 mPa.s.; or
   B4) a carboxyl group containing polyesteramide prepared from the reaction of a carboxyl group containing polyester with a diamine, or a (meth)acryloyl group containing polyesteramide, prepared from the reaction of glycidyl(meth)acrylate with a carboxyl group terminated polyesteramide, and characterised by:
      - a number average molecular weight (Mn) from 800 to 16 000 and preferably from 1300 to 8500,
      - an acid number of from 10 to 100, and preferably 20 to 70 mg KOH/g when a carboxyl group containing polyesteramide is considered
      - a glass transition temperature (Tg) from 40 to 70°C when the polyester is amorphous,
      - a degree of unsaturation ranging from 0.15 to 4.00 and preferably from 0.35 to 2.50 milliequivalents of double bonds per gram of polyester when a (meth)acryloyl group containing polyesteramide is considered
      - an ICI cone/plate viscosity of less than 50000 mPa.s measured at 200°C.
   B5) a (meth)acryloyl group containing polyurethane prepared from the reaction of an hydroxyalkyl(meth)acrylate and a polyol with a polyisocyanate and characterised by:
      - a number average molecular weight (Mn) from 800 to 15000 and preferably from 1300 to 8500
      - a glass transition temperature (Tg) from 40 to 100°C
      - a degree of unsaturation ranging from 0.15 to 3.00 and preferably from 0.35 to 1.50 milliequivalents of double bonds per gram of polyurethane
      - an ICI cone/plate viscosity of less than 100000 mPa.s measured at 200°C; or
   B6) a (meth)acryloyl group containing oligomer selected from the triacrylate and the tri(meth)acrylate of tris(2-hydroxyethyl)isocyanurate, the epoxy acrylates and methacrylates which are formed by the reaction of an epoxy compound (for example, the diglycidyl ether of Bisphenol A) with acrylic or methacrylic acid, the urethane acrylates and methacrylates which are formed by the reaction of an organic di- or polyisocyanate with an hydroxyalkylacrylate or a hydroxyalkylmethacrylate and optionally a mono- and/or polyhydroxylated alcohol (for example, the reaction product of hydroxyethyl(meth)acrylate with toluenediisocyanate or isophoronediisocyanate, and the like; or
   B7) a curing agent having functional groups reactable with carboxylic acid groups, and selected from a polyepoxy compound and/or a β-hydroxyalkylamide containing compound.
      The polyepoxy compound, which is solid at room temperature, contains at least two epoxy groups per molecule such as for example, triglycidyl isocyanurate like the one marketed under the name of Araldite PT810 or the mixture of diglycidyl terephthalate and triglycidyl trimellitate, like the one marketed under the name of Araldite PT910 or PT912 or a glycidyl group containing acrylic copolymer such as GMA252, or Bisphenol A based epoxy resins such as Araldite GT7004 or the phenol or cresol epoxy novolacs such as Araldite ECN9699.
      The β-hydroxyalkylamide containing compound answers the general structure as 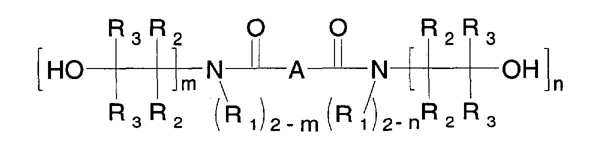 represented in Formula I.
      Wherein:
      - A represents a mono- or polyvalent organic group derived from a saturated or unsaturated alkyl group with 1 to 60 carbon atoms, or an aryl group, or a trialkene amino group with 1 to 4 carbon atoms per alkylene group, or a carboxy-alkenyl group, or an alkoxy carbonyl-alkenyl
      - R₁ represents hydrogen, an alkyl group with 1 to 5 carbon atoms or a hydroxyalkyl group with 1 to 5 carbon atoms
      - R₂ and R₃ are the same or different and each indepently represents hydrogen or a straight or branched alkyl group with 1 to 5 carbon atoms, while one of the groups R₂ and one of the groups R₃ may also form, together with the adjacent carbon atoms, a cycloalkyl group; or
   B8) a curing agent having functional groups reactable with hydroxyl groups, and selected from the suitable blocked isocyanate cross-linking agents, well known in the art may be used.
      Examples of the blocked polyisocyanate cross-linking compounds include those which are based on isophorone diisocyanate blocked with □-caprolactam, commercially available as Hüls B1530, Ruco NI-2 and Cargill 2400, or toluene-2,4-diisocyanate blocked with □-caprolactam, commercially available as Cargill 2450, and phenol-blocked hexamethylene diisocyanate.
      Another class of blocked polyisocyanate compounds which may be employed are adducts of the 1,3-diazetidine-2,4-dione dimer of isophorone diisocyanate and a diol, wherein the ratio of NCO to OH-groups in the formation of the adduct is about 1:0.5 to 1:0.9, the mole ratio of diazetidinedione to diol is from 2:1 to 6:5, the content of free isocyanate groups in the adduct is not greater than 8 weight percent and the adduct has a molecular weight of about 500 to 4000 and a melting point of about 70 to 130°C. Such an adduct is commercially available under the name Hüls BF1540; or
   B9) a curing agent having functional groups reactable with glycidyl groups, and selected from 1,12-dodecanedioic acid, sebacic acid, trimellitic acid, etc.

In addition to the essential components described above, compositions within the scope of the present invention can also include
- photo-initiators selected from aromatic carbonyl compounds, such as benzophenone and its alkylated or halogenated derivatives, anthraquinone and its derivatives, thioxanthone and its derivatives, benzoin ethers, aromatic or nonaromatic alphadiones, benzil dialkyl acetals, acetophenone derivatives and phosphine oxides.
- photo-activator, such as tributylamine, 2-(2-aminoethylamino)ethanol, cyclohexylamine, diphenylamine, tribenzylamine or aminoacrylates can be added to the formulation
- thermal initiators, such as peroxides or azo compounds.
- cross-linking catalysts, added in order to accelerate cross-linking of the thermosetting powder composition during curing. Examples of such catalysts include amines (e.g. 2-phenylimidazoline), phosphines (e.g. triphenylphosphine), ammonium salts (e.g. tetrabutylammonium bromide or tetrapropylammonium chloride), phosphonium salts (e.g. ethyltriphenylphosphonium bromide or tetrapropylphosphonium chloride) and organotin compounds (e.g. dibutyltin dilaurate, dibutyltin dimaleate, dibutyltin oxide, stannous octoate).
- flow control agents such as Resiflow PV5 (Worlee), Modaflow (Monsanto), Acronal 4F (BASF), etc.
- degassing agents such as benzoin (BASF) etc.
- UV-light absorbers such as Tinuvin 900 (Ciba), hindered amine light stabilisers represented by Tinuvin 144 (Ciba),
- stabilising agents such as Tinuvin 312 and 1130 (Ciba), antioxidants such as Irganox 1010 (Ciba) and stabilisers from the phosphonite or phosphite type can be added.
   Both, pigmented systems as well as clear lacquers can be prepared.
   A variety of dyes and pigments can be utilised in the composition of this invention.
   Examples of useful pigments and dyes are: metallic oxides such as titaniumdioxide, ironoxide, zincoxide and the like, metal hydroxides, metal powders, sulphides, sulphates, carbonates, silicates such as ammoniumsilicate, carbon black, talc, china clay, barytes, iron blues, leadblues, organic reds, organic maroons and the like.

Thus, according to the invention, an unsaturated semi-crystallyne polyester A) can be processed according to the invention without compound B). In this case, the powder composition will be cured, for example, by ultra-violet radiation, in the presence of a photoinitiator, or thermally, in the presence of a thermal initiator, or by electron beam, without initiator.

Such an unsaturated polyester A) can also be mixed with a (meth)acryloyl group containing polyester B1), or with a (meth)acryloyl group functionalised acrylic copolymer B2) , or with a (meth)acryloyl group containing (hydrogenated) polyphenoxy resin B3), or with a (meth)acryloyl group containing polyesteramide B4) or with a (meth)acryloyl group containing polyurethane B5) or with a (meth)acryloyl group containing oligomer B6), alone or in admixture. Such compounds A) and B) will crosslink together thermally or under irradiation.

A saturated carboxyl group containing semi-crystalline polyester A) alone or admixed with compounds B1) and/or B2), can be thermally cured, when mixed with B7) compounds, such as polyepoxy compounds or bêta-hydroxyalkylamides. Such a polyester A) containing hydroxyl groups can,be thermally cured with compounds B8) such as blocked polyisocyanates.

Other combinations of compounds A) and B) may also be used, as will be readily apparent for those skilled in the art.

The components of the composition according to this invention then are transformed into fine spherical powder particles using the process of this invention which consists in dry blending the different constituents in a mixer or blender (e.g. drum mixer), homogenizing the premix at temperatures ranging from 60 to 250°C in a single screw extruder such as the BUSS-Ko-Kneter or a double screw extruder such as the PRISM or APV. transferring the extrudate at a flow rate of from 30 to 300 g/min into the inner sound pressure node of an ultrasonic standing wave with an oscillation frequency between 19500 and 20500 Hz and a constant amplitude of 60 to 140 µm, generated by two transmitters, facing each other and fixed on a common horizontal axis at a distance of 15 to 50 mm.
When needed the premix can be subdivided into two or more separate premixes, which are premixed and melt-blended separately. The different extrudates then are mixed by e.g. the use of a static mixer immediately before reaching the atomiser.

The powdered composition may be deposed on the substrate by use of a powder gun such as an electrostatic CORONA gun or TRIBO gun. On the other hand well known methods of powder deposition such as the fluidised bed technique can be used. After deposition the powder is melted at a temperature between 90 and 250°C, causing the particles to flow and fuse together to form a smooth, uniform, continuous, uncratered coating on the substrate surface. Curing is obtained under the influence of heat, when thermosetting powder coating systems are concerned, or under the influence of radiation, when radiation curable powder coating systems are concerned or under the influence of both, heat and radiation, when dual cure systems are considered.

The examples that follow illustrate the invention without limiting it. Except when otherwise indicated, the parts mentioned throughout the description and in the examples are parts by weight.

### Example 1

### Step 1

A mixture of 369.7 parts of neopentyl glycol, 10.2 parts of trimethylolpropane along with 2.1 parts of n-butyltin trioctoate catalyst is placed in a conventional four-neck round bottom flask equipped with a stirrer, a distillation column connected to a water-cooled condenser, a nitrogen inlet and a thermometer connected to a thermoregulator.
The flask contents are heated while stirring, under nitrogen to a temperature of circa 140°C. Thereupon 528.7 parts of terephthalic acid along with 27.8 parts of adipic acid are added while stirring and the mixture is gradually heated to a temperature of 230°C. Distillation starts from about 190°C. After about 95% of the theoretical quantity of water is distilled and a transparent prepolymer is obtained, the mixture is cooled down to 200°C.
The hydroxyl functionalised prepolymer thus obtained, is characterised by:

| | |
|---|---|
| AN = | 10 mg KOH/g |
| OHN = | 51 mg KOH/g |

### Step 2

To the first step prepolymer standing at 200°C, 96.5 parts of isophthalic acid are added. Thereupon the mixture is gradually heated to 225°C. After a two-hour period at 225°C and when the reaction mixture is transparent, 0.8 parts of tributylphosphite are added and a vacuum of 50 mm Hg is gradually applied.
After 3 hours at 225°C and 50 mm Hg, following characteristics are obtained:

| | |
|---|---|
| AN = | 37 mg KOH/g |
| OHN = | 2 mg KOH/g |
| ICI^{200°C} = | 5400 mPa.s |

### Step 3

The carboxyl functionalised polyester is cooled down to 150°C and 0.9 parts of di-t-butylhydroquinone along with 4.6 parts of ethyltriphenylphosphonium bromide are added. Subsequently 77.3 parts of glycidylmethacrylate is slowly added (30 minutes) while stirring under oxygen. An hour after the addition is ended, a methacryl unsaturated polyester, with the following characteristics is obtained:

| | |
|---|---|
| AN = | 5 mg KOH/g |
| OHN = | 39 mg KOH/g |
| unsaturation = | 1.0 meq/g |
| ICI^{200°C} = | 3800 mPa.s |
| Tg^{quenched}(DSC 20°/min)= | 56°C |
| Mn (GPC) = | 4000 |

### Example 2

In a conventional four-neck round bottom flask equipped with a stirrer, an inlet for oxygen, an inlet for (meth)acrylic acid and a thermocouple attached to a thermoregulator, 910 parts of Araldite GT7004 are heated under oxygen to a temperature of 140°C. Subsequently 0.8 parts of ethyltriphenylphosphonium bromide are added and the addition of 90 parts of acrylic acid containing 0.2 parts of di-t-butylhydroquinone, is started. The acrylic acid addition is completed in a 3 hour period. One and a half hour after the completion of the acrylic acid addition, a resin with the following characteristics is obtained:

| | |
|---|---|
| AN = | 7 mg KOH/g |
| unsaturation = | 1.24 meq/g |
| ICI^{200°C} = | 700 mPa.s |
| Tg^{quenched}(DSC 20°/min)= | 49°C |
| Mn (GPC) = | 1650 |

### Example 3

388.48 parts of n-butylacetate are brought in a double walled reactor equipped with a nitrogen inlet and a thermoregulator. The temperature is set to a 92°C.
12.29 parts of VAZO 67 (2,2'-azobis(2-methylbutanenitrile)) is solubilised in 97.12 parts of n-butylacetate. This solution is added to the reactor in a time period of 215 minutes.
5 minutes after the start of the addition of the solution containing the initiator, a second solution consisting of 72.84 parts of styrene, 135.97 parts of glycidyl methacrylate, 150.98 parts of isobornylacrylate, 125.82 parts of methyl methacrylate and 16.51 parts of n-dodecylmercaptan, is added to the reactor in a time span of 180 minutes.
Once the addition has been terminated, the reaction mixture is kept for 100 minutes at a temperature of 92°C. The solvent is evaporated at a temperature of 175°C under vacuum. Once the remaining solvent has been removed, an acrylic polyester resin with following characteristics is obtained.

| | |
|---|---|
| Epoxy equivalent weight (g/eq) | 540 |
| Mn (GPC) | 5250 |
| Mw (GPC) | 9500 |
| Tg (°C) | 78 |
| Brookfield viscosity at 175°C (mPa.s) | 9500 |

### Example 4

Synthesis of a semi-crystalline polyester containing carboxylic end groups 231.6 parts of ethylene glycol and 2.5 parts of n-butyltin trioctoate, as catalyst, are introduced into a four-necked round-bottomed flask equipped with a stirrer, a distillation column connected to a water-cooled condenser, a nitrogen inlet pipe and a thermometer connected to a thermoregulator. The mixture is heated in a nitrogen atmosphere and with stirring to a temperature of approximately 140°C, 900.4 parts of 1,12-decanedioic acid are then added, still with stirring, and the mixture is heated to a temperature of 190°C, at which the water formed begins to distil. The heating in then continued gradually until the mass reaches a temperature of 230°C. When the distillation under atmospheric pressure stops, a vacuum of 50 mm Hg is gradually applied. After 3 hours at 230°C and 50 mm Hg, following characteristics are obtained:

| | |
|---|---|
| AN= | 21.5 mg KOH/g |
| OHN= | 1.6 mg KOH/g |
| ICI^{100°C}= | 1680 mPa.s |

### Example 5

Synthesis of a semi-crystalline polyester containing end methacryloyl groups

### Step 1

A mixture of 191.4 parts of ethylene glycol , 800.6 parts of 1,12-dodecanedioic acid and 2.2 parts of n-butyltin trioctoate, as catalyst, is reacted accordingly the reaction process as in example 4.
The semi-crystalline polyester containing end carboxyl groups thus obtained exhibits the following characteristics:

| | |
|---|---|
| AN= | 52 mg KOH/g |
| OHN= | 2 mg KOH/g |

### Step 2

The polyester obtained in the first stage is allowed to cool to a temperature of 140°C and 0.7 parts of di-tert-butylhydroquinone and 4.4 parts of benzyltriphenylphosphonium chloride are added thereto. 111.8 parts of glycidyl methacrylate are then added slowly to this mixture and the mixture is left stirring for one hour at 140°C under nitrogen. A semi-crystalline polyester containing end methacryloyl groups is obtained which exhibits the following characteristics:

| | |
|---|---|
| AN= | 2.0 mg KOH/g |
| OHN= | 48 mg KOH/g |
| end methacrylic unsaturation | 0.8 milliequivalent/g |
| ICI^{100°C} | 150 mPa.s |
| Mn (GPC) | 2530 |

The resins as illustrated above, are then formulated to a powder accordingly to one of the formulation examples as mentioned below.

| Example 6 | | Example 7 | | Example 8 | |
|---|---|---|---|---|---|
| Example 1 | 25 | Example 5 | 100 | Example 4 | 84 |
| Example 2 | 25 | | | Example 3 | 16 |
| Example 5 | 50 | | | | |
| Irganox 2959 | 2.5 | Irganox 2959 | 2.5 | | |
| Resiflow PV5 | 1.0 | Resiflow PV5 | 1.0 | Resiflow PV5 | 1.0 |
| | | | | Benzoin | 0.35 |

The powder compositions are prepared by dry mixing the constituents of examples 6 to 8, with the various substances conventionally used for the manufacture of paints and varnishes. The mixture obtained is homogenised in an extruder at a temperature of from 100 to 210 °C, and the extrudate is transferred into the inner sound pressure node of an ultrasonic standing wave with an oscillation frequency between 20.1 and 20.3 kHz. and a constant amplitude of 80 µm, generated by two transmitters (type: Konverter 902R, Booster 500, Titan, schwarz, from Branson ) facing each other and fixed on a common horizontal axis at a distance of from 21 to 24 mm.

For the different powder formulations of examples 6 to 8, using the conditions as mentioned above, spherical powder particles with a d50 value of d50 = 37 µm for example 6, of d50 = 31 µm for example 7 and of d50 = 36 µm for example 8 are obtained. For the three formulations a span (=[d90 - d10]/d50) of less than 1.5 is measured. The particle size as well as the particle size distribution are measured using the Mastersizer 2000 of Malvern.

The value d50 is the particle size for which just 50% of the particles are greater than or smaller than the d50 value; the d10 value designates the particle size for which 10% of the particles are smaller than this value. Correspondingly the d90 designates the article size for which 90% of the particles are finer than the d90 value.

The powders formulated as described in examples 6 to 8 and prepared accordingly the process in accordance with the present invention, then are applied with an electrostatic spray gun, at a voltage of 60 kV, on cold rolled steel panels at a film thickness of 40 to 60 µm.

After deposition, the coatings of example 6 and 7 are then subjected to melting in a medium wavelength infrared/convection oven (Triab) at a temperature of 140°C during a time of approximately 3 minutes, and are then subjected to irradiation with ultraviolet light emitted by a 160 W/cm Gallium-doped followed by a 160 W/cm medium-pressure mercury vapour UV-bulb (Fusion UV Systems Ltd.) with a total UV-dose of 4000 mJ/cm².

The powder of example 8 is submitted to a curing schedule of 10 minutes at 160°C in a conventional convection oven.

For the three formulations after application and curing, as described above, smooth, high gloss paint films are obtained exhibiting good solvent resistance, MEK-rubs (more than 100 double rubs) and flexibility (DI and RI (ASTM D2794) ≥ 80 kg.cm) are obtained.

The powders, comprising a binder composition according to the present invention, and prepared accordingly the process of the present invention all prove to be spherical with a low particle size and a narrow span, contrary to what is obtained using conventional grinding techniques. So, the formulations of Ex 6 to 8, cryogenically ground using Alpine UPZ100, all prove a particle size with a d50 value of more than 50 µm and a span higher than 2. To obtain the powders using conventional grinding a low throughput is required in order to avoid blocking of the grinder. After grinding the powders have to be dried because of water absorption due to condensation.

## Claims

1. Process for the manufacture of powder coating compositions comprising:
a) the melting of a powder coating composition, comprising, as binder, at least one saturated or unsaturated semi-crystalline polyester or polyesterurethane A) and , optionally, one or more saturated or unsaturated compounds B) different from A), at least one of which being reactable with the other resins present in the binder, and other constituents essential for the manufacture of powder coatings,
b) atomising the resulting melt into droplets using acoustic forces of an ultrasonic standing wave field, made up of ultrasonic waves generated by two sonotrodes, facing each other and oscillating with the same amplitude of about 60 to 140 µm at a substantial identical constant frequency of at least 10 kHz, preferably between 20 and 50 kHz and
c) allowing the atomised droplets to cool to form solid free flowing semi-crystalline powder particles.

2. Process according to claim 1 wherein:
the different constituents A), B) and other constituents necessary for the preparation of a powder:
- are dry blended
- the dry blend is homogenised in the molten phase, at temperatures ranging from 60 to 250°C, preferably in an extruder, to give an extrudate
- the molten extrudate is transferred into the inner sound pressure node of an ultrasonic standing wave with an oscillation frequency of from 19500 to 20500 Hz and a constant amplitude generated by a plurality of transmitters facing each other and fixed on a common horizontal axis at a distance of from 15 to 50 mm.

3. Process according to any of claims 1 or 2 wherein:
A) is a carboxyl and/or hydroxyl and/or (meth)acryloyl group functionalised semi crystalline polyester or polyesterurethane **characterised by**:
- a number averaged molecular weight ranging from 800 to 16 000, preferably from 1 300 to 8 500
- a melt viscosity (cone/plate at 200°C) of less than 10 000 mPa.s
- an acid number and/or a hydroxyl number ranging from 10 to 100 mg KOH/g and preferably from 20 to 70 mg KOH/g when an acid and/or an hydroxyl functional polyester or polyesterurethane is considered.
- a degree of unsaturation ranging from 0.15 to 4.00 and preferably from 0.35 to 2.50 milliequivalents of double bonds per gram of polyester or polyesterurethane when a (meth)acryloyl group functionalised polyester or polyesterurethane is considered.
- a melting point ranging from 60 to 150°C and a glass transition temperature of less than 50°C for semi-crystalline polyesters or polesteryurethanes.
- a degree of crystallinity, measured by differential scanning calorimetry (DSC) according to ASTM D3415 of at least 5 J/g, and preferably 10 J/g.

4. Process according to any of claims 1 to 3 wherein:
B1) is a carboxyl and/or hydroxyl and/or (meth)acryloyl group functionalised amorphous polyester or polyesterurethane .
B2) is a carboxyl and/or hydroxyl and/or glycidyl and/or (meth)acryloyl group functionalised acrylic copolymer
B3) is a glycidyl or (meth)acryloyl group containing (hydrogenated) polyphenoxy resin
B4) is a carboxyl or (meth)acryloyl group containing polyesteramide
B5) is a (meth)acryloyl group containing polyurethane
B6) is a (meth)acryloyl group containing oligomer
B7) is a curing agent having functional groups reactable with carboxylic acid groups
B8) is a curing agent having functional groups reactable with hydroxyl groups
B9) is a curing agent having functional groups reactable with glycidyl groups

5. Process according to any of claims 1 to 4 wherein:
the at least one saturated or unsaturated semi-crystalline polyester or polyesterurethane A) is present at a ratio of 10 - 100% by weight, and the optional constituent B) is present at a ratio of 0 - 90% by weight in confront of the binder weight.

6. Process according to any of claims 1 to 5 wherein:
the at least one saturated or unsaturated semi-crystalline polyester or polyesterurethane A) is present at a ratio of 50 - 100% by weight, and the optional constituent B) is present at a ratio of 0 - 50% by weight in confront of the binder weight.

7. Process according to any of claims 1 to 6 wherein:
the at least one saturated or unsaturated semi-crystalline polyester or polyesterurethane A) is present at a ratio of 70 - 100% by weight, and the optional constituent B) is present at a ratio of 0 - 30% by weight in confront of the binder weight.

8. Powder coating composition obtained according to the process of any of claims 1 to 7 containing:
- the binder of claim 1 to 7
- UV-light absorbers and/or hindered amine light stabilisers
- flow control agent
- degassing agent,
- photo-initiator and/or photo-activator
- thermal initiator
- thermosetting catalyst.

9. Powder composition of claim 8 for use as a clear lacquer.

10. Powder composition of claim 8 further containing pigments, dyes, fillers.

11. Process for coating a metallic or non-metallic substrate, wherein the powder composition of claims 8 to 10 is applied to the substrate by an electrostatic or friction charging spray gun, or by fluidised bed, the powder being thereafter cured by heat or by radiation or both.

12. Substrate partly or entirely coated by the process of claim 11.
